# EUROPÄISCHE PATENTSCHRIFT

(11) **EP 0 618 064 B1**
(45) Veröffentlichungstag und Bekanntmachung des Hinweises auf die Patenterteilung: **31.07.1996**
(21) Anmeldenummer: 94101010.0
(22) Anmeldetag: 25.01.1994
(51) Int. Cl.: B29D 30/42, B29C 65/78, B29K 21/00, B29K 105/10, B29L 29/00, B29L 30/00

(54) **Spleissmaschine**
Splicing machine
Appareil à raccorder

(30) Priorität: 20.03.1993 DE 4309013
(43) Veröffentlichungstag der Anmeldung: 05.10.1994
(73) Patentinhaber: Karl Eugen Fischer GmbH Maschinenfabrik, D-96224 Burgkunstadt (DE)
(72) Erfinder: Hoffmann, Bernd, D - 96224 Burgkunstadt (DE)
(74) Vertreter: Matschkur, Götz, Lindner Patent- und Rechtsanwälte

(56) Entgegenhaltungen:
- EP-A- 0 104 339
- EP-A- 0 490 599
- DE-B- 1 245 111
- FR-A- 1 487 807
- FR-A- 2 446 170
- US-A- 3 231 447
- US-A- 3 253 489
- US-A- 4 769 104
- US-A- 4 832 780
- PATENT ABSTRACTS OF JAPAN vol. 16, no. 363 (M-1290)5. August 1992 & JP-A-04 113 831 (YOKOHAMA RUBBER CO.) 15. April 1992

## Beschreibung

Die Erfindung betrifft eine Spleißmaschine, insbesondere zum überlappten Spleißen von Cordbandstreifen aus Stahl- oder Textilcord, bei der ein Streifen durch ein Transportband an die Kante des gespleißten Cordbandes herangefördert und durch Zusammenfahren zwischen einer oberen Spleißleiste und einem unteren Spleißkasten mit diesem verbunden wird.

Beim Verspleißen von Cordbandstreifen werden die Kanten der zu verspleißenden Streifen maschinell aneinander herangefördert und aneinander- bzw. übereinandergelegt, je nachdem, ob die Maschine stumpf- oder überlappspleißend arbeitet. Hierbei besteht jedoch mithin das Problem, daß die zu verspleißenden Kanten nicht parallel zueinander verlaufen. Bei bisher bekannten Spleißmaschinen erfolgt zumeist keine Korrektur des Kantenverlaufs, eine exakte Kantenanpassung ist nicht möglich. Somit läßt sich kein definierter Überlapp bzw. exakt parallel verlaufender Stoß der Kanten erreichen, der Überlapp ist dabei mehr oder weniger groß, die Stoßnaht kann einen Luftspalt aufweisen. Dies ist insbesondere dann der Fall, wenn die Überlapp- bzw. Stoßnaht gewinkelt zur Bandlängsrichtung verläuft. Infolge dieser willkürlichen Kantenausrichtung und bedingt durch die beim fortlaufenden Spleißen festgelegte, sich bezüglich der unterschiedlich verlaufenden Kanten nicht ändernde bzw. anpassende Lage der Spleißleiste ist eine Anbringung von Spleißnähten gleichbleibender Qualität nicht gewährleistet. Ferner ist, insbesondere beim Überlappspleißen, durch den dann relativ großzumachenden Überlapp ein erhöhter Materialverbrauch die Folge. Zwar ist eine Korrektur der Kantenverläufe von Hand möglich, jedoch läßt sich auch so die Kantenanpassung nur ungenau erreichen, weshalb auch bei einer manuellen Korrektur kein definierter Überlapp bzw. Stoß erreicht wird. Ferner ist eine derartige Ausrichtung sehr zeitaufwendig, da ein kontinuierliches Arbeiten der Maschine nicht möglich ist. Weiterhin ist dazu eine Bedienungsperson nötig, die die nicht ungefährliche Ausrichtung der Kanten bei jeder anzubringenden Spleißnaht vornimmt. Ein automatisch hergestellter Überlapp bei senkrecht zur Bandlängsrichtung verlaufenden Spleißnähten ist zwar möglich, jedoch ist auch dieser nur entsprechend groß möglich, da eine Kantenausrichtung bzw. eine Ausrichtung der Spleißleiste auf den Kantenverlauf nicht erfolgt. Infolgedessen lassen sich auch hier keine definierten Verhältnisse schaffen.

Eine zum Spleißen von Cordband geeignete Vorrichtung gemäß dem Oberbegriff des Anspruch 1, ist bereits in der US-A-4 832 780 beschrieben. Bei dieser Vorrichtung erfolgt zwar ein Verschieben der Spleißleiste, die auf einem X-Y-Tisch verfahrbar ist, jedoch wird dieses zu keinem Zeitpunkt bezüglich der in Rede stehenden Kanten ausgerichtet.

Der Erfindung liegt somit die Aufgabe zugrunde, eine Spleißmaschine zu schaffen, bei der eine vollautomatische exakte Ausrichtung der Kanten der zu verspleißenden Bänder und eine darauf abgestimmte Ausrichtung der Spleißleiste möglich ist, um in jeder Lage der Naht einen definierten und kleinstmöglichen Überlapp bzw. einen exakten Stoß zu erreichen, damit eine gleichbleibende Qualität der Spleißnaht und der Verbindung der Bänder gewährleistet ist.

Zur Lösung der Aufgabe ist erfindungsgemäß gemäß dem kennzeichnenden Teil des Anspruchs 1 vorgesehen, daß die Spleißleiste und der Spleißkasten mittels einer ersten Korrektureinrichtung parallel zur Hinterkante des gespleißten Cordbandes ausrichtbar sind, wobei die Spleißleiste und der Spleißkasten bezüglich der Hinterkante des ruhenden Cordbandes verschwenkt werden, und daß die Vorderkante des Streifens mittels einer zweiten Korrektureinrichtung parallel zur Hinterkante des ruhenden Cordbandes ausrichtbar ist, wobei die in ihrer Lage unbekannte Vorderkante solange eine unbestimmte, nur von der Lage der Hinterkante abhängige maschinelle Relativverschiebung erfährt, bis sie ihre von der Hinterkante des ruhenden Cordbandes bestimmte Endlage einnimmt, die von an der Spleißleiste und (oder dem Spleißkasten angeordneten Sensorelementen erfaßt wird.

Vorteilhafte Ausführungsformen sind in den abhängigen Ansprüchen beschrieben.

Mit besonderem Vorteil weist die Spleißmaschine zwei automatische Korrektureinrichtungen auf. Die erste Korrektureinrichtung dient der exakten parallelen Ausrichtung der Spleißleiste und des Spleißkastens, zwischen denen die Verbindung der Bänder erfolgt, bezüglich der Kante des bereits gespleißten Cordbandes. Mittels der zweiten Korrektureinrichtung wird die Kante des herangeförderten Streifens bezüglich der Cordbandkante und somit auch bezüglich der bereits auf diese ausgerichteten Spleißleiste in Parallelstellung gebracht. Somit läßt sich, je nach Maschinentyp, sowohl eine exakt parallel verlaufende Stoßnaht als auch ein genau definierter Überlapp vollautomatisch einstellen. Da sowohl die beiden zu verspleißenden Kanten als auch die Spleißleiste völlig parallel zueinander verlaufen, ist somit auch gewährleistet, daß die Spleißnaht definiert entlang und parallel der Kanten verläuft. Mit besonderem Vorteil läßt sich somit eine gleichbleibende Qualität der Spleißnähte aufrechterhalten.

In Weiterbildung der Erfindung kann ein über einen Antrieb drehbarer unterer Spleißtisch vorgesehen sein, an dem die Spleißleiste und der Spleißkasten angeordnet sind, und ein das Cordband und den Streifen tragender, am unteren Spleißtisch über zwei Druckfedern zentrierter und drehbar gelagerter oberer Spleißtisch, die gegeneinander entgegen dem Federdruck verschwenkbar sind. Durch eine derartige Teilung des Spleißtisches in einen oberen und einen unteren läßt sich die Ausrichtung der Spleißleiste und des Spleißkastens bezüglich der Cordbandkante, die durch ein Verschwenken bezüglich derselben erfolgt, einfachst erreichen. Der untere Spleißtisch wird dabei einfachst gegen den oberen solange verschwenkt, bis die Ausrichtung erfolgt ist. Da die Verschwenkung entgegen dem Federdruck der den oberen Spleißtisch am unteren zentrierenden Federn erfolgt, werden diese beim Verschwenken gespannt bzw. gedehnt. Durch diese Federverspannung erfolgt vorteilhaft ein Rückschwenken des oberen Spleißtisches in die Ausgangsstellung bezüglich des unteren nach erfolgter Ausrichtung. Mit besonderem Vorteil ist am unteren Spleißtisch ein Antrieb angeordnet, über den sowohl die Ausrichtung der Spleißleiste bezüglich der Cordbandkante erfolgt als auch die Einstellung des Winkels der Spleißnaht bezüglich der Bandlängsrichtung, bei der der obere und untere Spleißtisch gemeinsam samt Spleißleiste und Spleißkasten verschwenkt werden.

Im Rahmen der Erfindung kann ferner vorgesehen sein, daß der obere Spleißtisch durch eine Klemmvorrichtung, vorzugsweise einen Klemmzylinder, lösbar verklemmbar ist. Mit besonderem Vorteil ist durch eine derartige Verklemmung des oberen Spleißtisches gewährleistet, daß das auf diesem ruhende Cordband während des gesamten Ausricht- und Verspleißvorganges in Ruhe ist, so daß sowohl die Spleißleiste als auch nachfolgend die Kante des herangeförderten Streifens exakt auf die ruhende Cordbandkante ausgerichtet werden können. Ferner läßt sich nach erfolgter Verklemmung der untere Spleißtisch einfach gegen den oberen entgegen dem Federdruck verschwenken, die Rückkehr des oberen Spleißtisches in seine Ausgangsstellung erfolgt dann vorteilhaft erst nach Lösen des Klemmzylinders.

Auf der Basis der Erfindung kann vorgesehen sein, daß an der Spleißmaschine ein oder mehrere Sensorelemente zum Erfassen der Position der Kante des gespleißten Cordbandes angeordnet sind und in Weiterführung des Erfindungsgedankens, daß die Spleißmaschine ein oder mehrere weitere Sensorelemente zum Erfassen der Position der Kante des zugeführten Streifens aufweist. Um eine vollautomatische Ausrichtung der zu verspleißenden Kanten zu ermöglichen, ist die Erfassung der jeweiligen Positionen der beiden Kanten sowohl während des Transports als auch während der Ausrichtvorgänge vonnöten, weshalb mit besonderem Vorteil eine Vielzahl von Sensorelementen an der Spleißmaschine angeordnet ist. Durch diese Sensorelemente, die entsprechend ihrer Funktion mit den jeweiligen Maschinenteilen und untereinander verschaltet sind, erfolgt vollautomatisch die Steuerung sowohl der Förder- und Ausrichtvorgänge als auch des Verspleißvorganges selbst.

Ferner kann in Weiterführung des Erfindungsgedankens vorgesehen sein, daß die Spleißmaschine ein oder mehrere, den zugeführten Streifen lösbar klemmende, fördernde und/oder ausrichtende Klemmelemente, insbesondere Zangen, aufweist. Die Ausrichtung der Kante des herangeförderten Streifens bezüglich der ruhenden Cordbandkante erfolgt mit besonderem Vorteil mittels am Streifen angreifenden Klemmelementen. Der Streifen wird von den Klemmelementen entsprechend ihrer jeweiligen Funktion verschoben, bis er die entsprechende Position innehat und die Ausrichtung abgeschlossen ist, wonach die Zangen den Streifen freigeben und in ihre Ausgangspositionen zurückfahren, so daß ein kontinuierlicher und zeitsparender Arbeitsablauf gewährleistet ist.

Zusätzliche, im Rahmen der Erfindung vorgesehene Einzelheiten und Details der erfindungsgemäßen Spleißmaschine ergeben sich aus den Unteransprüchen.

Weitere Vorteile, Merkmale und Einzelheiten der Erfindung ergeben sich aus der nachfolgenden Beschreibung eines Ausführungsbeispiels sowie anhand der Zeichnungen. Dabei zeigen:
- Fig. 1: eine Aufsicht auf die Spleißmaschine mit seitlich angeordneten Transportbändern,
- Fig. 2: einen Schnitt durch die Verspleißeinheit der Spleißmaschine entlang der Linie II-II in Fig. 1,
- Fig. 3A: eine Ansicht der Lagerung und Zentrierung des oberen Spleißtisches am unteren Spleißtisch,
- Fig. 3B: eine Ansicht des bei einer Korrektur bezüglich des oberen Spleißtisches verschobenen unteren Spleißtisches, und
- Fig. 4 bis 12: den Förder-, Ausricht- und Spleißablauf der Spleißmaschine.

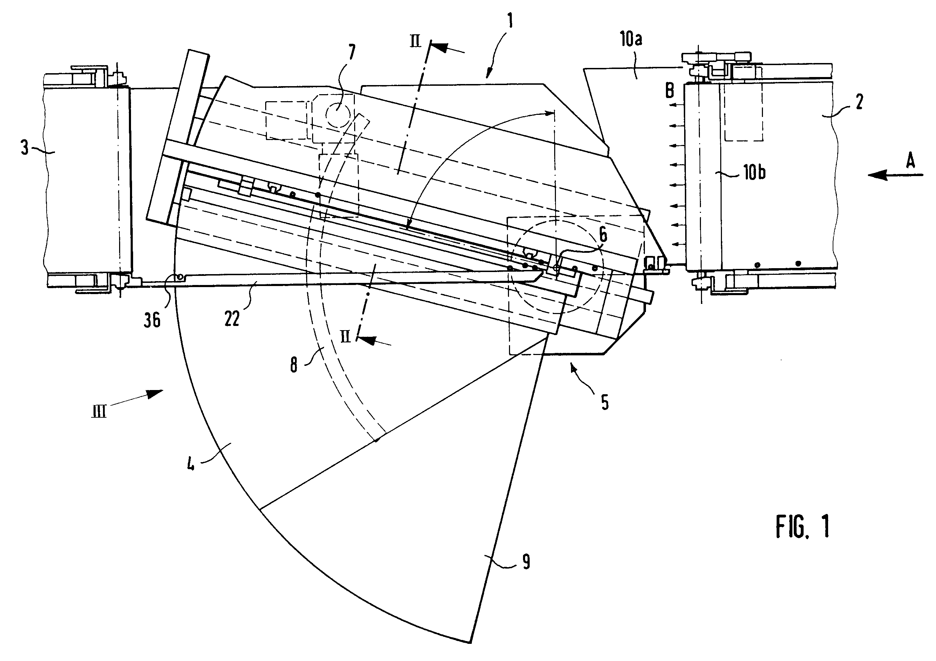

Fig. 1 zeigt eine Spleißmaschine 1 mit einem den Streifen heranfördernden ersten Transportband 2 und einem das gespleißte Cordband abfördernden zweiten Transportband 3. Die Spleißmaschine 1 selbst weist einen Spleißtisch 4 und eine mit diesem verbundene Spleißeinheit 5 auf. Sowohl der Spleißtisch 4 als auch die Spleißeinheit 5 sind gemeinsam um die Drehachse 6 verschwenkbar, wobei der Schwenkbereich 15° bis 90° beträgt, definiert von der Stellung der Spleißeinheit 5 bezüglich der Förderrichtung A des Streifens. Das Verschwenken erfolgt über einen Antrieb 7, der über eine Kette an einem mit dem Spleißtisch 4 verbundenen Zahnkranzsegment 8 angreift. Mit dieser Antriebseinheit läßt sich die Spleißeinheit 5 samt Spleißtisch 4 präzise verschwenken, so daß sich jedweder Winkel, den die Spleißeinheit bezüglich der zu verspleißenden Streifen und damit schlußendlich auch die angebrachte Spleißnaht einnimmt, einstellen läßt. Am Spleißtisch ist in seitlicher Verlängerung ein zusätzliches Tischsegment 9 angeordnet, das nach unten abklappbar ist, sofern die Verschwenkung nur gering ist, bei größeren Verschwenkungen bis hin zur Maximalverschwenkung von 90° jedoch wird es hochgeschwenkt, damit der Streifen vollständig aufliegen kann. Zur Vereinfachung der Übergabe des herangeförderten Streifens vom Transportband 2 auf den Spleißtisch 4 ist zwischen diesen ein Übergabeblech 10a und ein zweites, am Ende des Transportbandes 2 angebrachtes Übergabeblech 10b zwischengeordnet, an dem zusätzlich ein den Streifen tragendes und somit die Reibung des Streifens auf den Übergabeblechen 10a, 10b verminderndes Luftkissen, angedeutet durch die Pfeile B, angelegt werden kann.

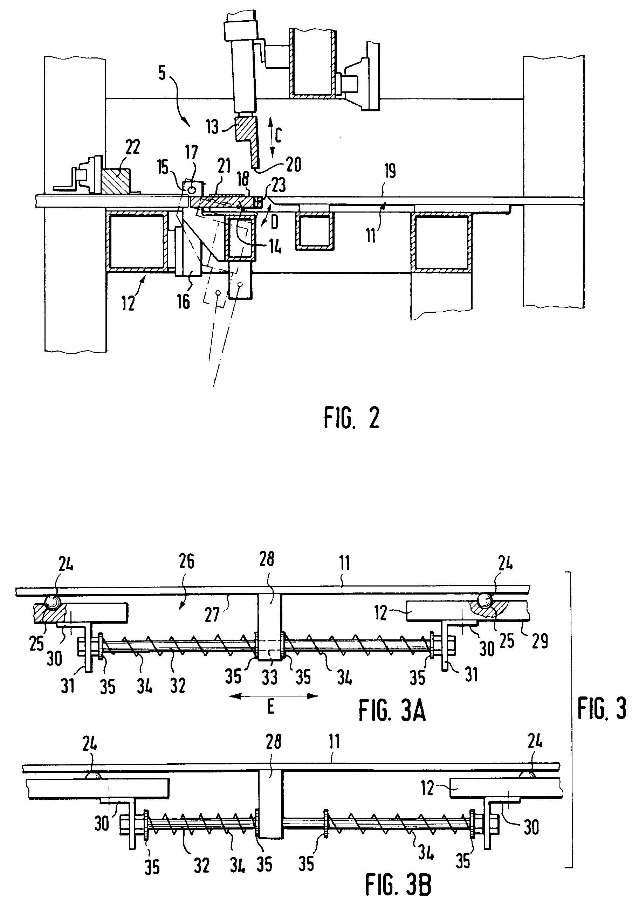

Fig. 2 zeigt zur Demonstration des Aufbaues der Spleißeinheit 5 und deren Anordnung bezüglich des Spleißtisches 4 einen Schnitt durch die Spleißmaschine 1 aus Fig. 1. Der Spleißtisch 4 besteht aus einem oberen Spleißtisch 11 und einem unteren Spleißtisch 12, wobei der obere Spleißtisch 11 am unteren Spleißtisch 12 drehbar gelagert ist. Die Spleißeinheit 5 besteht aus einer Spleißleiste 13 und einem Spleißkasten 14; beide sind parallel zueinander verlaufend und gemeinsam mit dem unteren Spleißtisch 14 verbunden und können infolgedessen nur gemeinsam verschwenkt werden. Die Spleißleiste 13 ist oberhalb des Spleißkastens 14 angeordnet und ist, wie durch den Doppelpfeil C angedeutet, höhenverschiebbar. Der Spleißkasten 14 ist über je einen an den seitlichen Endbereichen des Spleißkastens 14 angreifenden Trägerarm 15 am unteren Spleißtisch 12 schwenkbar befestigt. Die Schwenklagerung erfolgt dabei an einem Träger 16 des unteren Spleißtisches 12 um die Schwenkachse 17 derart, daß der Spleißkasten 14 um die Schwenkachse 17 nach unten abklappbar ist, angedeutet durch den Doppelpfleil D. Im hochgeklappten Zustand ist die Oberseite 18 des Spleißkastens 14 nahezu auf gleicher Ebene mit der Oberseite 19 des oberen Spleißtisches, auf dem das zuvor bereits verspleißte Cordband ruht, so daß dieses nahezu in einer Ebene verläuft. Das Verspleißen der Kante des zuvor verspleißten Cordbandes und der Kante des herangeförderten Streifens erfolgt durch Absenken der Spleißleiste 13, die dann mit ihrer Unterkante 20 auf die auf der Oberseite 18 des Spleißkastens 14 übereinanderliegenden zu verspleißenden Kanten, bei hochgeschwenktem Spleißkasten 14, drückt und diese verspleißt.

Auf der Oberseite 18 des Spleißkastens 14 ist ein Förderband 21 angeordnet, mittels dem der darauf ruhende Cordbandstreifen schräg bzw. quer, je nach Verschwenkung der gesamten Spleißeinheit 5, zur Förderrichtung A verschiebbar ist, damit der Cordbandstreifen definiert an einer Anschlagleiste 22, die den oberen Spleißtisch 11 übergreift und somit unabhängig von der Verschwenkung stets parallel zur Förderrichtung A verläuft, anliegt. Ferner sind am Spleißkasten 14 Bohrungen 23 angebracht, die sich symmetrisch beabstandet über die gesamte Länge des Spleißkastens 14 erstrecken und über die ein an der Unterseite des darauf ruhenden Cordbandstreifens angreifendes Vakuum anlegbar ist. Durch dieses insbesondere im Kantenbereich des Cordbandstreifens angreifende Vakuum wird sichergestellt, daß die Kante, bezüglich der die Spleißeinheit 5 im Rahmen der ersten Korrektur ausgerichtet wurde, auch beim Abschwenken des Spleißkastens 14 zwecks Überlappung der zu verspleißenden Kanten ihre Lage beibehält und nicht verrutscht.

Fig. 3 zeigt die Lagerung und Zentrierung des oberen Spleißtisches 11 am unteren Spleißtisch 12 und die Stellung der Tische 11, 12 zueinander, wenn der untere Spleißtisch 12 samt der an ihm angeordneten Spleißeinheit 5 im Rahmen der ersten Korrektur gegen den das Cordband tragenden oberen Spleißtisch 11 verschwenkt worden ist, angedeutet durch den Doppelpfeil E. Die Lagerung des oberen Spleißtisches 11 am unteren Spleißtisch 12 erfolgt über Kugeln 24, so daß beide Tische 11, 12 gegeneinander verschwenkbar sind. Außer einer Kugellagerung sind auch andere Lagerungen, z.B. über Walzen oder mittels eines Luftkissens, möglich. Die Kugeln 24 ruhen in am unteren Spleißtisch 12 angebrachten Vertiefungen 25. Der untere Spleißtisch 12 weist eine Ausnehmung 26 auf, durch die ein an der Unterseite 27 des oberen Spleißtisches 11 angeordneter Vorsprung 28 hindurchgreift und innerhalb der der Vorsprung 28 beim Verdrehen der Tische 11, 12 gegeneinander verschoben wird. An der Unterseite 29 des unteren Spleißtisches 12 sind im Bereich der Ausnehmung 26 beidseitig je ein Winkelelement 30 angeordnet, zwischen deren Vertikalarmen 31 eine Führungsstange 32 angeordnet ist. Die Führungsstange 32 durchsetzt dabei den Vorsprung 28 in einer an diesem angebrachten Bohrung 33, so daß der Vorsprung 28 und damit der obere Spleißtisch 11 von der Führungsstange 32 geführt werden. Zwischen dem Vorsprung 28 und den Vertikalarmen 31 sind beidseitig von der Führungsstange 32 durchsetzte Druckfedern 34 angeordnet, die an an der Führungsstange 32 angeordneten Scheiben 35 aufgelagert sind. Die beiden am Vorsprung 28 angreifenden Scheiben 35 sind dabei auf der Führungsstange beweglich gelagert, so daß sie beim Verschwenken des unteren Spleißtisches 12 durch den ortsfesten Vorsprung 28 verschoben werden, was zur Folge hat, daß die jeweilige Druckfeder 34, abhängig von der Verschwenkrichtung E, komprimiert wird, wie in Fig. 3B dargestellt. Eine derartige Verschwenkung der Tische 11, 12 gegeneinander erfolgt im Rahmen der ersten Korrektur der Spleißeinheit 5 bezüglich der Kante des Cordbandes. Die Verschwenkung erfolgt ebenfalls wie die Einstellung des Verspleißwinkels mittels des Antriebs 7, der an dem Zahnkranzsegment 8, das mit dem unteren Spleißtisch 12 verbunden ist, angreift. Damit ein Veschwenken des unteren Spleißtisches 12 gegen den oberen Spleißtisch 11 möglich ist, wird der obere Spleißtisch 11 mittels eines an diesem randseitig angreifenden Klemmzylinder 36 vor Beginn der Verschwenkung und damit vor Beginn der ersten Korrektur in seiner Position verklemmt. Nach erfolgter erster und zweiter Korrektur und nach Beendigung des Verspleißvorganges wird die Verklemmung des oberen Spleißtisches 11 gelöst und der obere Spleißtisch 11 wird durch die während des Verschwenkvorgangs vorgespannte Druckfeder 34 wieder in seine Ausgangsstellung, wie sie Fig. 3A zu entnehmen ist, zurückbewegt. Die Ausnehmung 26 ist dabei so bemessen, daß eine Verschwenkung der Tische 11, 12 zueinander im Rahmen der ersten Korrektur von ± 2° bezüglich der Ausgangsposition möglich ist.

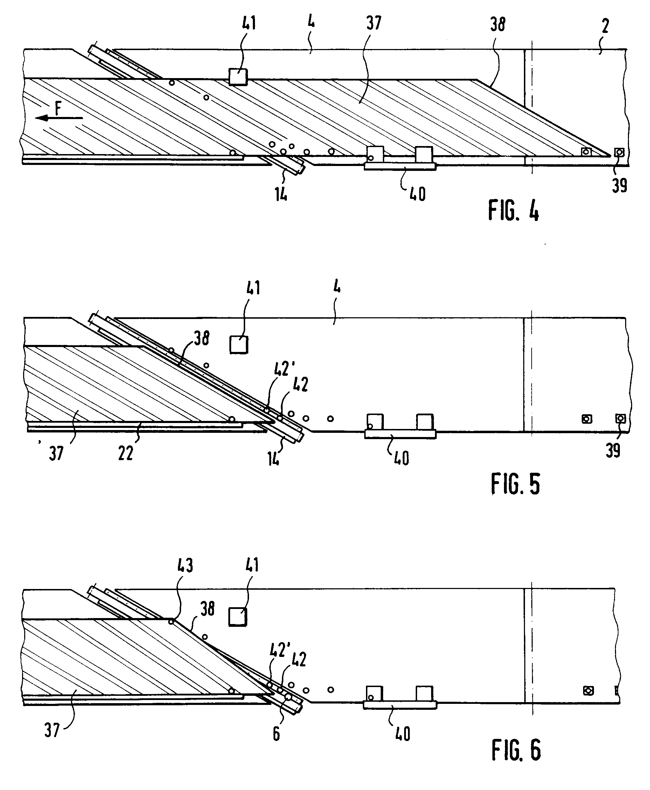

Die Figuren 4 bis 12 zeigen prinzipiell den Ablauf der einzelnen Korrekturvorgänge und des Verspleißvorganges, wobei im Rahmen der Figurenbeschreibung auch die Anordnung und Wirkungsweise der einzelnen Sensoren bzw. Meßfühler und deren Zusammenwirken mit den einzelnen Maschinenteilen deutlich wird.

Fig. 4 zeigt den Abtransport eines zuvor gespleißten Cordbandstreifens 37 in Richtung des Pfeiles F. Der Cordbandstreifen 37 wird von den beiden Transportbändern 2, 3 gefördert. Während des Bandtransportes passiert die Kante 38 des Cordbandes 37 einen oberhalb und im Endbereich des Transportbandes 2 angeordneten ersten Meßfühler 39, der die Kante 38 erfaßt. Der Meßfühler 39 steht mit dem Antrieb der Transportbänder 2, 3 in Verbindung und schaltet die Fördergeschwindigkeit, nach Erfassen der Kante 38, von einem Eilgang auf einen Schleichgang um. Der Eilgang dient zum schnellen Fördern sowohl des gespleißten Cordbandes als auch des heranzuführenden Streifens, um jedoch eine exakte Erfassung der Kantenposition zu gewährleisten, muß die Fördergeschwindigkeit verringert werden. Dem Erfassen der Kante 38 mit dem Meßfühler 39 folgt ein Zurückfahren sowohl der ersten Zange 40, die als Zangenpaar ausgebildet ist, als auch der zweiten Zange 41, die beide im Rahmen des zweiten Korrekturvorganges bei dem zuvor verspleißten Cordbandstreifen verfahren wurden, in ihre Ausgangspositionen.

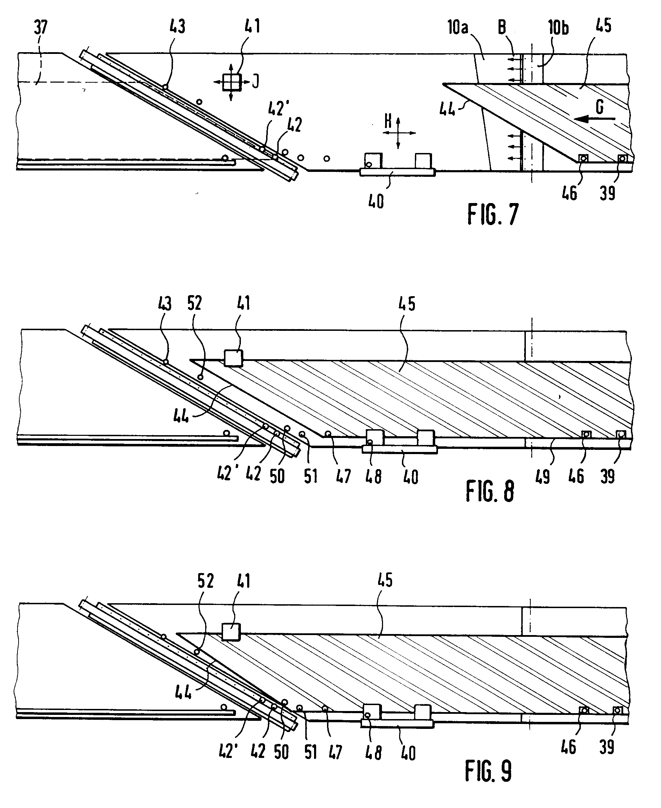

Im Schleichgang wird der Cordbandstreifen 37 so lange weiterbefördert, bis die Kante 38 in den Arbeitsbereich der Spleißeinheit 5 wandert und dort einen ersten Sensor 42, der an der Oberseite des Spleißkastens 14 angeordnet ist, passiert. Wenn der erste Sensor 42, dem ein ebenfalls am Spleißkasten 14 angeordneter zusätzlicher Sensor 42' nebengeordnet sein kann, die Kante 38 erfaßt hat, wird der Antrieb des Transportbandes 3 gestoppt, so daß die Kante 38 auf dem Spleißkasten in Ruhe verbleibt. Fig. 5 zeigt nun den Idealfall der Lage der Kante 38 bezüglich des Spleißkastens 14 bzw. der gesamten Spleißeinheit 5. Die Kante 38 verläuft dabei parallel zum Spleißkasten 14 und damit auch parallel zur Spleißleiste 13 (nicht dargestellt). Demgemäß muß die Spleißeinheit 5 nicht mehr auf die Kante 38 ausgerichtet werden. Ist dies der Fall, so setzt sich der Vorgang entsprechend den Figuren 7 bis 12 fort. Fig. 6 jedoch zeigt den in der Praxis meist auftretenden Normalfall. Die Kante 38 des Cordbandes 37 ist dabei nicht parallel zur Spleißeinheit 5, sie verläuft dazu unter einem Winkel. Um nun die Spleißeinheit 5 auf die Kante 38 auszurichten, wird die Spleißeinheit 5 um die Drehachse 6 mittels des Antriebs 7 verschwenkt. Dieses Verschwenken erfolgt so lange, bis der zweite Sensor 43, der an der Spleißleiste 13 angeordnet ist, die Kante 38 erkennt und den Verschwenkvorgang abbricht. Der zweite Sensor 43 steht dabei in Verbindung mit dem Antrieb 7 und schaltet diesen zu bzw. ab. Dies erfolgt sowohl für den Fall, daß die Kante den zweiten Sensor 43 bereits passiert hat als auch in dem Fall, daß sie den zweiten Sensor 43 noch nicht passiert hat. Nach erfolgter Ausrichtung steht die Spleißeinheit 5 parallel zur Kante 38. Damit die Kante 38 ihre Lage nicht mehr ändert, wird an ihre Unterseite über die Spleißklappe 14 ein Vakuum angelegt, welches die Kante 38 in Position hält. Nachfolgend klappt die Spleißklappe 14 nach unten ab und nimmt die auf ihr fixierte Kante 38 mit, so daß die zu verspleißende Kante 44 des im folgenden herangeführten Streifens 45 über die Kante 38 überlappt werden kann.

Nach erfolgter erster Korrektur wird der Streifen 45 vom ersten Transportband 2 herangefördert. Der Transport erfolgt dabei im Eilgang, jedoch wird mit dem Passieren der Kante 44 des Streifens 45 an einem zweiten Meßfühler 46, der oberhalb des Transportbandes 2 angeordnet ist, auf Schleichgang umgeschaltet. Gleichzeitig wird ein Luftkissen zwischen den Übergabeblechen 10a, 10b eingeschaltet (angedeutet durch die Pfeile B), welches den Streifen 45 in diesem Bereich trägt.

Beim Weitertransport des Streifens 45 in Förderrichtung (Pfeil G) passiert die Kante 44 des Streifens 45 einen am oberen Spleißtisch angeordneten dritten Sensor 47. Sobald die Kante 44 vom Sensor 47 erfaßt worden ist, schaltet dieser die erste Zange 40. Die Zange 40, die sowohl in als auch senkrecht zur Förderrichtung G verfahrbar ist, was in Fig. 7 durch die gekreuzten Doppelpfeile H angedeutet ist, fährt dabei senkrecht zur Förderrichtung G seitlich an den Streifen heran. Sobald ein im Zangengrund der Zange 40 angeordneter dritter Meßfühler 48 die seitliche Längskante 49 des Streifens 45 erkennt, wird die Ausfahrbewegung der Zange 40 gestoppt und die Zange 40 klemmt den Streifen 45. Danach fährt die Zange 40 in eine vorbestimmte Ausgangsposition zurück, was zur Folge hat, daß der Streifen 40 entsprechend dieser Ausgangsposition ausgerichtet wird. Die Zange ist dabei maximal 20 mm vertikal verfahrbar.

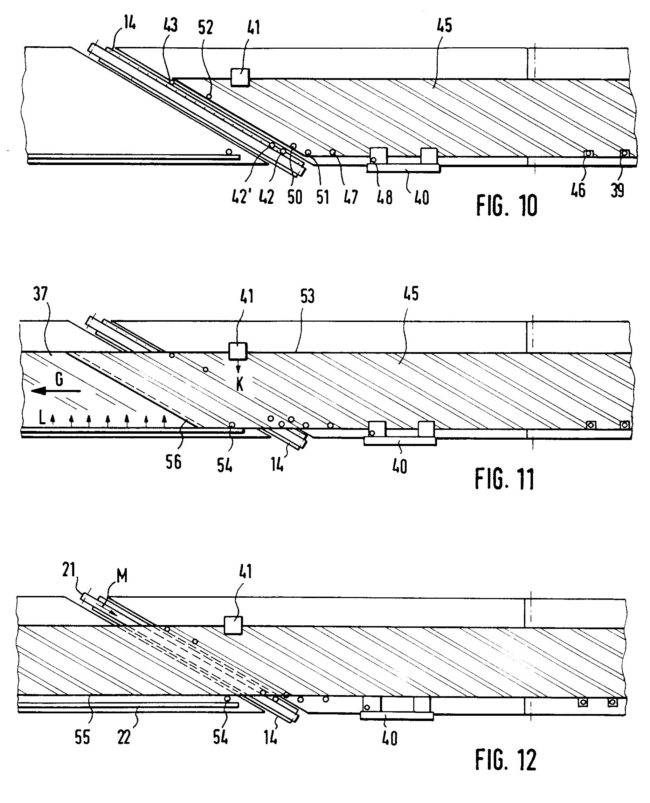

Der Fördervorgang des Streifens 45 erfolgt auch während des Klemmvorganges der Zange 40 und im geklemmten Zustand derselben kontinuierlich. Zu diesem Zweck ist die Zange 40 auch in Förderrichtung bis maximal 60 mm verfahrbar. Sobald die Kante 44 einen vierten Sensor 50 erreicht, der an der Spleißleiste 13 angeordnet ist, wird die Vorwärtsbewegung der Zange 40 gestoppt. Gleichzeitig wird ein Druckzylinder 51 angesteuert, der nahe dem vierten Sensor 50 angeordnet ist und auf den Streifen 45 drückt und diesen somit fixiert. Da der Druckzylinder nahe der Längskante 49 im Bereich der Kante 44 angeordnet ist und dort auf den Streifen 45 drückt, ist dieser quasi um diesen Punkt schwenkbar. Mit dem Andrücken des Druckzylinders 51 wird gleichzeitig die Zange 40 gelöst. Der Weitertransport des Streifens erfolgt durch die gleichzeitig mit der ersten Zange am Streifen 45 angreifende zweite Zange 41, die ebenfalls in und senkrecht zur Förderrichtung verfahrbar ist, wie durch die Pfeile I in Fig. 7 angedeutet. Der Streifen 45, der nach wie vor im Schleichgang gefördert wird, wird durch die Zange 41 weitertransportiert und quasi um den Druckzylinder 51 herumgeschwenkt, so daß sich somit die Lage der Kante 44 verändert. Dieser Weitertransport mittels der Zange 41 erfolgt so lange, bis ein an der oberen Spleißleiste angeordneter fünfter Sensor 52 die Kante 44 erkennt (Fig. 9). Mit dem Passieren des fünften Sensors 52 läuft ein vorbestimmtes Zeitintervall ab, nach welchem die Transportbewegung der zweiten Zange 41 gestoppt wird. Die Kante 44 verläuft dann exakt parallel zur Spleißeinheit 5 und somit auch zu der Kante 38 des Cordbandstreifens 37 (Fig. 10). Durch die Anordnung der Sensoren 50 und 52 und des Stoppzylinders 51 wird der Grad der Überlappung der beiden Kanten 38, 44 bestimmt. Gleichermaßen kann, nach geänderter Anordnung, die Maschine auch als Stumpfspleißmaschine verwendet werden.

Sobald die Transportbewegung der zweiten Zange 41 gestoppt worden ist, wird auch das am Spleißtisch anliegende Luftkissen ausgeschaltet, damit der Streifen 45 in Ruhe ist. Gleichzeitig wird die abgeklappte Spleißklappe 14 nach oben geschwenkt, wodurch die Kante 38 unter die Kante 44 gebracht wird, die beiden parallel zueinander verlaufenden Kanten 38, 44 liegen somit definiert übereinander und können verspleißt werden. Gleichzeitig mit dem Aufklappen wird die Spleißleiste 13 abgesenkt, die beiden Kanten 38, 44 werden miteinander an der Spleißnaht 56 verspleißt. Während des Verspleißvorganges wird das Transportband 2 kurzzeitig zurückgefahren, damit etwaige, durch den Weitertransport des Streifens 45 durch die zweite Zange 41 bei ausgefahrenem Druckzylinder 51 entstandene Schlaufen entfernt werden. Gleichzeitig wird die zweite Zange 41 gelöst.

Nach erfolgtem Verspleißen wird die Spleißleiste 13 hochgefahren und das Luftkissen an den Übergabeblechen 10a, 10b wird eingeschalten. Gleichzeitig fährt die gelöste zweite Zange 41 senkrecht zum Streifen 45, bis die Streifenkante 53 im Zangengrund bzw. an einem an der zweiten Zange 41 angeordneten Anschlag anliegt, was aus Fig. 11 zu entnehmen ist (Pfeil K). Gleichzeitig wird ein weiteres, am oberen Spleißtisch 11 angreifendes und den Cordbandstreifen 37 bzw. später den Streifen 45 tragendes Luftkissen, angedeutet durch die Pfeile L, angelegt. Sodann erfolgt der Abtransport des entlang der Spleißnaht 56 verspleißten Bandes.

Fig. 12 zeigt den Fall, daß das verspleißte Band nicht an der das Band führenden Anschlagleiste 22 anliegt. Zu diesem Zweck ist an der Anschlagleiste 22 ein sechster Sensor 54 zum Erfassen der Längskante 55 des nunmehr verspleißten Bandes angeordnet. Erfaßt dieser die Längskante 55 nicht, so wird das auf dem Spleißkasten 14 angeordnete Förderband 21 zugeschaltet, welches in Richtung auf die Anschlagleiste 22 umläuft und so das verspleißte Cordband an die Anschlagleiste 22 fördert, was durch den Pfeil M in Fig. 12 angedeutet ist. Liegt die Kante 55 sodann an der Anschlagleiste an, erfolgt der Abtransport des verspleißten Cordbandes, wobei dazu wiederum auf Eilgang umgeschaltet wird. Der gesamte, bezüglich der Figuren 4 bis 12 beschriebene Ablauf beginnt sodann von neuem, sobald der Meßfühler 39 die neue zu verspleißende Kante des vorher verspleißten Bandes erfaßt.

## Patentansprüche

1. Spleißmaschine zum überlappten Spleißen von Cordbandstreifen aus Stahl- oder Textilband, bei der die Vorderkante eines Streifen durch ein Transportband an die Hinterkante des gespleißten Cordbandes herangefördert und durch Zusammenfahren zwischen einer oberen Spleißleiste und einem unteren Spleißkasten mit diesem verbunden wird, wobei die Kanten, die Spleißleiste und der Spleißkasten mittels Korrektureinrichtung zueinander ausgerichtet sind, dadurch gekennzeichnet, daß die Spleißleiste (13) und der Spleißkasten (14) mittels einer ersten Korrektureinrichtung parallel zur Hinterkante (38) des gespleißten Cordbandes (37) ausrichtbar sind, wobei die Spleißleiste (13) und der Spleißkasten (14) bezüglich der Hinterkante (38) des ruhenden Cordbandes (37) verschwenkt werden, und daß die Vorderkante (44) des Streifens (45) mittels einer zweiten Korrektureinrichtung parallel zur Hinterkante (38) des ruhenden Cordbandes (37) ausrichtbar ist, wobei die in ihrer Lage unbekannte Vorderkante (44) solange eine unbestimmte, nur von der Lage der Hinterkante (38) abhängige maschinelle Relativverschiebung erfährt, bis sie ihre von der Hinterkante (38) des ruhenden Cordbandes (37) bestimmte Endlage einnimmt, die von an der Spleißleiste (13) und/oder dem Spleißkasten (14) angeordneten Sensorelementen erfaßt wird.

2. Spleißmaschine nach Anspruch 1, gekennzeichnet durch einen über einen Antrieb (7) drehbaren unteren Spleißtisch (12), an dem die Spleißleiste (13) und der Spleißkasten (14) angeordnet sind, und einen das Cordband (37) und den Streifen (45) tragenden, am unteren Spleißtisch (12) über zwei Druckfedern (34) zentrierten und drehbar gelagerten oberen Spleißtisch (11), die gegeneinander entgegen dem Federdruck verschwenkbar sind.

3. Spleißmaschine nach Anspruch 2, dadurch gekennzeichnet, daß der obere Spleißtisch (11) durch eine Klemmvorrichtung, vorzugsweise einen Klemmzylinder (36), lösbar verklemmbar ist.

4. Spleißmaschine nach einem der Ansprüche 1 bis 3, gekennzeichnet durch ein oder mehrere weitere, an der Spleißleiste und/oder dem Spleißkasten und/oder ggf. dem Spleißtisch angeordnete Sensorelemente zum Erfassen der Position der Kante (38) des gespleißten Cordbandes (37).

5. Spleißmaschine nach Anspruch 4, gekennzeichnet durch einen an der Oberseite (18) des Spleißkastens (14) angeordneten, mit einem das gespleißte Cordband (37) abführenden Transportband (3) in Steuerverbindung stehenden ersten Sensor (42).

6. Spleißmaschine nach Anspruch 4 oder 5, gekennzeichnet durch einen an der Spleißleiste (17) angeordneten und mit dem Antrieb (7) des unteren Spleißtisches (12) in Steuerverbindung stehenden zweiten Sensor (43).

7. Spleißmaschine nach einem der Ansprüche 1 bis 6, gekennzeichnet durch ein oder mehrere, den zugeführten Streifen lösbar klemmende, fördernde und/oder ausrichtende Klemmelemente, insb. Zangen.

8. Spleißmaschine nach Anspruch 7, gekennzeichnet durch eine seitlich am zugeführten Streifen (45) angreifende und über einen ersten Antrieb in und senkrecht (H) zur Streifenförderrichtung (G) derart bewegbare erste Zange (40), vorzugsweise ein Zangenpaar, daß der Streifen (45) bei geklemmter Zange (40) förderbar ist.

9. Spleißmaschine nach Anspruch 8, dadurch gekennzeichnet, daß an der ersten Zange (40) ein die Position der Längskante (49) des Streifens (45) erfassender Meßfühler (48) angeordnet ist.

10. Spleißmaschine nach einem der Ansprüche 7 bis 9, gekennzeichnet durch eine der ersten Zange (40) im wesentlichen gegenüberliegend angeordnete, über einen zweiten Antrieb in und senkrecht (I) zur Förderrichtung (G) des Streifens (45) bewegbare und drehbare, den Streifen (45) seitlich klemmende und dabei fördernde zweite Zange (41).

11. Spleißmaschine nach Anspruch 10, dadurch gekennzeichnet, daß an der zweiten Zange (41) ein den Streifen (45) führender Anschlag angeordnet ist.

12. Spleißmaschine nach einem der Ansprüche 7 bis 11, dadurch gekennzeichnet, daß der erste und/oder der zweite Zangenantrieb mit dem Transportband (2), vorzugsweise über ein Gestänge, gekoppelt ist.

13. Spleißmaschine nach einem der vorangehenden Ansprüche, gekennzeichnet durch einen vorzugsweise randseitig am Streifen (45) angreifenden und den Streifen (45) klemmenden Druckzylinder (51).

14. Spleißmaschine nach einem der vorangehenden Ansprüche, dadurch gekennzeichnet, daß die Sensorelemente einen auf dem oberen Spleißtisch (11) angeordneten, der ersten Zange (40) nachgeschalteten und diese ansteuernden dritten Sensor (47) umfassen.

15. Spleißmaschine nach einem der vorangehenden Ansprüche, dadurch gekennzeichnet, daß die Sensorelemente einen am oberen Spleißtisch (11) vorzugsweise im Bereich vor dem Spleißkasten (14) angeordneten, den Druckzylinder (51) aussteuernden vierten Sensor (50) umfassen.

16. Spleißmaschine nach einem der vorangehenden Ansprüche, dadurch gekennzeichnet, daß die Sensorelemente einen an der oberen Spleißleiste (13) angeordneten und mit der zweiten Zange (41) in Steuerverbindung stehenden fünften Sensor (52) umfassen.

17. Spleißmaschine nach einem der vorangehenden Ansprüche, dadurch gekennzeichnet, daß der untere Spleißkasten (14) um eine horizontale und parallel zur oberen Spleißleiste (13) verlaufende Achse (17) nach unten abklappbar ist.

18. Spleißmaschine nach einem der vorangehenden Ansprüche, dadurch gekennzeichnet, daß an dem unteren Spleißkasten (14) wenigstens im Bereich der Kante (38) des aufliegenden Cordbandes (37) Öffnungen (23) zum Anlegen eines zuschaltbaren, das Cordband (37) fixierenden Vakuums angeordnet sind.

19. Spleißmaschine nach einem der vorangehenden Ansprüche, dadurch gekennzeichnet, daß auf der Oberseite (18) des unteren Spleißkastens (14) ein das Cordband (37) an eine Anschlagleiste (22) verschiebendes Förderband (21) angeordnet ist.

20. Spleißmaschine nach Anspruch 19, gekennzeichnet durch einen an der Anschlagleiste (22) angeordneten, die Längskante (55) des Cordbandes (37) erfassenden und mit dem Förderband (21) in Steuerverbindung stehenden sechsten Sensor (54).

21. Spleißmaschine nach einem der vorangehenden Ansprüche, dadurch gekennzeichnet, daß in dem Bereich zwischen dem Transportband (2) und dem oberen Spleißtisch (11) ein oder mehrere Übergabebleche (10a, 10b) angeordnet sind.

22. Spleißmaschine nach Anspruch 21, dadurch gekennzeichnet, daß die Übergabebleche (10a, 10b) Öffnungen zum Anlegen eines den Streifen (45) tragenden Luftkissens (B) aufweist.

23. Spleißmaschine nach einem der vorangehenden Ansprüche, gekennzeichnet durch einen oder mehrere, oberhalb des Transportbands (2) angeordnete und den Streifenanfang und/oder -ende erfassende weitere Meßfühler (39, 46), wobei die Meßfühler (39, 46) in Steuerverbindung mit einem oder beiden Antrieben der Transportbänder (2, 3) sind.

24. Spleißmaschine nach einem der vorangehenden Ansprüche, dadurch gekennzeichnet, daß die Sensoren (42, 43, 47, 50, 52, 54) und/oder die Meßfühler (39, 46, 48) Laser, Lichtleiter, Lichtschranken od.dgl. umfassen.

## Claims

1. Splicing machine for the overlapping splicing of corded flat strip composed of steel or of a textile, in which the leading edge of a strip is brought up to the trailing edge of the spliced corded strip by means of a conveyor belt and, by moving the two ends together between an upper splicing strip and a lower splicing box, is joined to said splicing box, the edges, the splicing strip and the splicing box being aligned with one another by means of an adjusting device, characterised in that the splicing strip (13) and the splicing box (14) are capable of being aligned parallel to the rear edge (38) of the spliced corded strip (37) by means of a first adjusting device, the splicing strip (13) and the splicing box (14) being swivelled relative to the rear edge (38) of the stationary corded strip (37), and in that the leading edge (44) of the strip (25) is capable of being aligned parallel to the trailing edge (38) of the stationary corded strip by means of a second adjusting device, the leading edge (44) (whose position is not known) undergoes a non-specific machine-operated relative displacement dependent only on the position of the trailing edge (38) until it assumes its final position, which is determined by the trailing edge (38) of the stationary corded strip (37) and which is detected by sensor elements disposed on the splicing strip (13) and/or the splicing box (14).

2. Splicing machine according to claim 1, characterised by a lower splicing table (12) rotatable via a drive (7), on which table the splicing strip and the splicing box (14) are disposed, and by a rotatably mounted upper splicing table (11) which supports the corded strip (37) and the strip (45) and which is centred with the lower splicing table (12) via two pressure springs (34), the tables being pivotable relative to one another against the pressure of the spring.

3. Splicing machine according to claim 2, characterised in that the upper splicing table (11) is capable of being detachably clamped by a clamping device, preferably a clamping cylinder (36).

4. Splicing machine according to one of claims 1 to 3, characterised by one or more further sensor elements, which are disposed on the splicing strip and/or the splicing box and/or optionally to the splicing table and which are for detecting the position of the edge (38) of the spliced corded strip (37).

5. Splicing machine according to claim 4, characterised by a first sensor (42) in controlling connection with a conveyor belt (3) and disposed on the upper face (18) of the splicing box (14) and discharging the spliced corded strip (37).

6. Splicing machine according to claim 4 or 5, characterised by a second sensor (43) disposed on the splicing strip (17) and in controlling connection with the drive (7) of the lower splicing table (12).

7. Splicing machine according to one of claims 1 to 6, characterised by one or more clamping elements, in particular pincers, which detachably clamp, convey and/or align the strip being supplied.

8. Splicing machine according to claim 7, characterised by a first pincer (40), preferably pair of pincers, which acts laterally on the strip (45) supplied and which is movable via a first drive in and perpendicular (H) to the strip conveying direction (G) in such a manner that the strip (45) is conveyable with the pincers (40) in the clamping position.

9. Splicing machine according to claim 8, characterised in that a measuring sensor (48) for detecting the position of the longitudinal edge (49) of the strip (45) is disposed on the first pincer (40).

10. Splicing machine according to one of claims 7 to 9, characterised by a second pincer (41), which is disposed substantially opposite the first pincer (40), is movable and rotatable via a second drive in and perpendicular (I) to the conveying direction (G) of the strip (45), and clamps the strip (45) laterally so as to convey the strip.

11. Splicing machine according to claim 10, characterised in that a stop guiding the strip (45) is disposed on the second pincer (41).

12. Splicing machine according to one of claims 7 to 11, characterised in that the first and/or the second pincer drive is coupled to the conveyor belt (2), preferably via a linkage.

13. Splicing machine according to one of the preceding claims, characterised by a pressure cylinder (51) acting preferably on the edge of the strip (45) and gripping the strip (45).

14. Splicing machine according to one of the preceding claims, characterised in that the sensor elements comprise a third sensor (47) disposed on the upper splicing table (11), in series with the first pincer (40) and actuating same.

15. Splicing machine according to one of the preceding claims, characterised in that the sensor elements comprise a fourth sensor (50) disposed on the upper splicing table (11), preferably in the region in front of the splicing box (14), and driving the pressure cylinder (51).

16. Splicing machine according to one of the preceding claims, characterised in that the sensor elements comprise a fifth sensor (52) disposed on the upper splicing strip (13) and being in controlling connection with the second pincer (41).

17. Splicing machine according to one of the preceding claims, characterised in that the lower splicing box (14) is pivotable downward about a horizontal axis (17) which is parallel to the upper splicing strip (13).

18. Splicing machine according to one of the preceding claims, characterised in that at least in the region of the edge (38) of the corded strip (37) resting on top of the lower splicing box (14) apertures (23) are provided for the application of a vacuum, which can be switched on in order to fix the corded strip (37).

19. Splicing machine according to one of the preceding claims, characterised in that on the upper face (18) of the lower splicing box (14) a conveyor belt (21) is provided which displaces the corded strip (37) along a stop ledge (22).

20. Splicing machine according to claim 19, characterised by a sixth sensor (54) disposed on the stop ledge (22), detecting the longitudinal edge (55) of the corded strip (37) and being in controlling connection with the conveyor belt (21).

21. Splicing machine according to one of the preceding claims, characterised in that in the region between the conveyor belt (2) and the upper splicing table (11) one or more transfer plates (10a, 10b) are provided.

22. Splicing machine claim 21, characterised in that the transfer plates (10a, 10b) have apertures for the application of an air cushion for carrying the strip (45).

23. Splicing machine according to one of the preceding claims, characterised by one or more additional measuring sensors (39, 46) disposed over the conveyor belt (2) and detecting the beginning or end of the strip, the measuring sensors (39, 46) being in controlling connection with one or both drives of the conveyor belts (2, 3).

24. Splicing machine according to one of the preceding claims, characterised in that the sensors (42, 43, 47, 50, 52, 54) and/or the measuring sensors (39, 46, 48) comprise laser, optic fibres, light barriers or the like.

## Revendications

1. Machine à raccorder destinée à raccorder par chevauchement des bandes de nappe de corde en ruban d'acier ou de textile, dans laquelle le bord avant d'une bande est transporté par une bande transporteuse jusqu'au bord arrière de la nappe de corde raccordée, et est relié à celle-ci par rapprochement entre une barre de raccordement supérieure et un caisson de raccordement inférieur, les bords, la barre de raccordement et le caisson de raccordement étant orientés les uns par rapport aux autres au moyen de dispositifs de correction, caractérisée en ce que la barre de raccordement (13) et le caisson de raccordement (14) peuvent être orientés parallèlement au bord arrière (38) de la nappe de corde raccordée (37), au moyen d'un premier dispositif de correction, la barre de raccordement (13) et le caisson de raccordement (14) étant alors déplacés par pivotement relativement au bord arrière (38) de la nappe de corde (37) immobile, et en ce que le bord avant (44) de la bande (45) peut être orienté parallèlement au bord arrière (38) de la nappe de corde (37) immobile, au moyen d'un second dispositif de correction, le bord avant (44), dont la position est inconnue, subissant alors un déplacement en translation relatif mécanique, indéterminé, ne dépendant que de la position du bord arrière (38), jusqu'à ce qu'il prenne sa position finale qui est déterminée par le bord arrière (38) de la nappe de corde (37) immobile, et qui est détectée par des éléments de détection disposés sur la barre de raccordement (13) et/ou le caisson de raccordement (14).

2. Machine à raccorder selon la revendication 1, caractérisée par une table de raccordement inférieure (12) pouvant être déplacée en rotation au moyen d'un mécanisme d'entraînement (7), sur laquelle sont disposés la barre de raccordement (13) et le caisson de raccordement (14), et par une table de raccordement supérieure (11), qui supporte la nappe de corde (37) et la bande (45) et qui est montée à rotation et centrée par l'intermédiaire de deux ressorts de compression (34) sur la table de raccordement inférieure (12), ces deux tables pouvant pivoter l'une par rapport à l'autre à l'encontre de la poussée des ressorts.

3. Machine à raccorder selon la revendication 2, caractérisée en ce que la table de raccordement supérieure (11) peut être bloquée, de manière libérable, par un dispositif de serrage, de préférence un vérin de serrage (36).

4. Machine à raccorder selon l'une des revendications 1 à 3, caractérisée par un ou plusieurs autres éléments de détection, qui sont disposés sur la barre de raccordement et/ou le caisson de raccordement et/ou, le cas échéant, la table de raccordement, et qui sont destinés à détecter la position du bord (38) de la nappe de corde raccordée (37).

5. Machine à raccorder selon la revendication 4, caractérisée par un premier détecteur (42) disposé sur le côté supérieur (18) du caisson de raccordement (14) et se trouvant en liaison de commande avec la bande transporteuse (3) évacuant la nappe de corde raccordée (37).

6. Machine à raccorder selon la revendication 4 ou 5, caractérisée par un second détecteur (43) disposé sur la barre de raccordement (17) et se trouvant en liaison de commande avec le mécanisme d'entraînement (7) de la table de raccordement inférieure (12).

7. Machine à raccorder selon l'une des revendications 1 à 6, caractérisée par un ou plusieurs éléments de serrage, notamment des pinces, serrant de manière libérable la bande amenée, la transportant et/ou l'orientant.

8. Machine à raccorder selon la revendication 7, caractérisée par une première pince (40), de préférence une paire de pinces, agissant latéralement sur la bande amenée (45), et déplaçable au moyen d'un premier mécanisme d'entraînement dans la direction de transport (G) de la bande et perpendiculairement (H) à cette direction, de manière telle, que la bande (45) puisse être transportée lorsque la pince (40) est serrée.

9. Machine à raccorder selon la revendication 8, caractérisée en ce que sur la première pince (40), est disposé un palpeur de mesure (48) détectant la position du bord longitudinal (49) de la bande (45).

10. Machine à raccorder selon l'une des revendications 7 à 9, caractérisée par une seconde pince (41), qui est disposée sensiblement en regard de la première pince (40), qui est rotative et déplaçable dans la direction de transport (G) de la bande (45) et perpendiculairement (I) à cette direction, au moyen d'un second mécanisme d'entraînement, et qui serre latéralement la bande (45) et la transporte.

11. Machine à raccorder selon la revendication 10, caractérisée en ce que sur la seconde pince (41), est disposée une butée guidant la bande (45).

12. Machine à raccorder selon l'une des revendications 7 à 11, caractérisée en ce que le premier et/ou le second mécanisme d'entraînement de pince sont couplés à la bande transporteuse (2), de préférence par l'intermédiaire d'un mécanisme à tringles.

13. Machine à raccorder selon l'une des revendications précédentes, caractérisée par un vérin de compression (51) agissant de préférence en bordure sur la bande (45) et serrant la bande (45).

14. Machine à raccorder selon l'une des revendications précédentes, caractérisée en ce que les éléments de détection comprennent un troisième détecteur (47) disposé sur la table de raccordement supérieure (11), en aval de la première pince (40), et commandant celle-ci.

15. Machine à raccorder selon l'une des revendications précédentes, caractérisée en ce que les éléments de détection comprennent un quatrième détecteur (50) disposé sur la table de raccordement supérieure (11), de préférence dans la zone devant le caisson de raccordement (14), et commandant le vérin de compression (51).

16. Machine à raccorder selon l'une des revendications précédentes, caractérisée en ce que les éléments de détection comprennent un cinquième détecteur (52) disposé sur la barre de raccordement supérieure (13), et se trouvant en liaison de commande avec la seconde pince (41).

17. Machine à raccorder selon l'une des revendications précédentes, caractérisée en ce que le caisson de raccordement inférieur (14) peut être basculé vers le bas, autour d'un axe (17) horizontal et s'étendant parallèlement à la barre de raccordement supérieure (13).

18. Machine à raccorder selon l'une des revendications précédentes, caractérisée en ce que sur le caisson de raccordement inférieur (14), au moins dans la zone du bord (38) de la nappe de corde (37) qui y repose, sont disposées des ouvertures (23) pour l'application d'un vide susceptible d'être établi et immobilisant la nappe de corde (37).

19. Machine à raccorder selon l'une des revendications précédentes, caractérisée en ce que sur le côté supérieur (18) du caisson de raccordement inférieur (14) est disposée une bande transporteuse (21) faisant se déplacer la nappe de corde (37) contre une barre de butée (22).

20. Machine à raccorder selon la revendication 19, caractérisée par un sixième détecteur (54) disposé sur la barre de butée (22), détectant le bord longitudinal (55) de la nappe de corde (37), et se trouvant en liaison de commande avec la bande transporteuse (21).

21. Machine à raccorder selon l'une des revendications précédentes, caractérisée en ce que dans la zone entre la bande transporteuse (2) et la table de raccordement supérieure (11), sont disposées une ou plusieurs tôles de transfert (10a, 10b).

22. Machine à raccorder selon la revendication 21, caractérisée en ce que les tôles de transfert (10a, 10b) présentent des ouvertures pour l'application d'un coussin d'air (B) supportant la bande (45).

23. Machine à raccorder selon l'une des revendications précédentes, caractérisée par un ou plusieurs autres palpeurs de mesure (39, 46), disposés au-dessus de la bande transporteuse (2) et détectant le début de bande et/ou la fin de bande, les palpeurs de mesure (39, 46) étant en liaison de commande avec l'un des mécanismes d'entraînement des bandes transporteuses (2, 3) ou les deux.

24. Machine à raccorder selon l'une des revendications précédentes, caractérisée en ce que les détecteurs (42, 43, 47, 50, 52, 54) et/ou les palpeurs de mesure (39, 46, 48) comprennent des lasers, des guides optiques, des barrières photo-électriques ou éléments similaires.
